# EUROPÄISCHE PATENTSCHRIFT

(11) **EP 3 142 853 B1**
(45) Veröffentlichungstag und Bekanntmachung des Hinweises auf die Patenterteilung: **10.06.2020**
(21) Anmeldenummer: 15709953.2
(22) Anmeldetag: 16.03.2015
(51) Int. Cl.: B29C 70/32, B29C 70/08, B29L 31/00, B29K 705/02

(54) **VERFAHREN ZUR HERSTELLUNG VON EINEM DRUCKBEHÄLTER MIT NASSGEWICKELTEM CFK**
METHOD FOR PRODUCING A PRESSURE VESSEL HAVING WET-WRAPPED CARBON-FIBER-REINFORCED PLASTIC
PROCÉDÉ DE FABRICATION D'UNE ENCEINTE SOUS PRESSION COMPORTANT UN PLASTIQUE RENFORCÉ PAR DES FIBRES DE CARBONE (CFK) À BOBINAGE HUMIDE

(30) Priorität: 12.05.2014 DE 102014208830
(43) Veröffentlichungstag der Anmeldung: 22.03.2017
(73) Patentinhaber: Bayerische Motoren Werke Aktiengesellschaft, 80809 München (DE)
(72) Erfinder: CHRIST, Timo, 81371 München (DE)
(86) Internationale Anmeldenummer: PCT/EP2015/055413
(87) Internationale Veröffentlichungsnummer: WO 2015/172913

(56) Entgegenhaltungen:
- JP-A- H04 101 831
- JP-A- 2010 125 825
- JP-A- 2011 236 926

## Beschreibung

Die Erfindung betrifft ein Verfahren zur Herstellung eines Druckbehälters nach Anspruch 1. Die Erfindung betrifft daher ein Verfahren zur Herstellung eines Wasserstoff-Druckbehälters, insbesondere für ein Kraftfahrzeug.
Moderne Antriebssysteme für Kraftfahrzeuge basieren auf dem Einsatz von gasförmigem Wasserstoff als Energieträger. Hierzu wird der Wasserstoff in einem sogenannten Wasserstofftank mit einem bis zu 700-fachen Überdruck im Kraftfahrzeug installiert und mitgeführt. Derartige Wasserstofftanks wurden typischerweise als Stahlflaschen mit bis zu 200-fachem Überdruck eingesetzt. Die Wandung des Wasserstofftanks kann auch zum Erzielen eines höheren Fülldrucks zusätzlich aus einem Faserverbundwerkstoff mit beispielsweise Glas- und/oder Kohlenstofffasern (Carbonfasern) bestehen.

Zum Befüllen solcher Gastanks verfügen diese typischerweise über Füllstutzen zur Zu- und Ableitung des Wasserstoffs, beziehungsweise zur Versorgung eines Antriebssystems mit dem erforderlichen Wasserstoff.

Aus der DE 000010156377 A1 ist zum besipiel ein Druckgasbehälter bekannt, der aus einem Verbund eines zylindrischen Metallbehälters (Liner) und einem vorgefertigten Mantelrohr, insbesondere einem Laminatrohr besteht. Zur Herstellung des Verbund-Druckgasbehälters wird ein zylindrischer Metallbehälter in das vorgefertigte Mantelrohr gebracht und mittels Gasdruck so weit verformt und aufgeweitet, daß eine kraftschlüssige und unlösbare Verbindung zwischen dem Metallbehälter und dem Mantelrohr entsteht. Der Liner besteht z. B. aus einer Aluminiumlegierung und das Mantelrohr aus Kohlefaserlaminat.

Ein Ziel insbesondere in der Automobilindustrie ist die Gewichtsreduktion aller Bauteile, somit auch der mitgeführten Drucktanks. Um das Gewicht von Druckgasflaschen zu verringern, werden beispielsweise Verbundgasflaschen (Composite Flaschen) eingesetzt. Verbundgasflaschen bestehen aus einem sogenannten Liner, welcher über einen wesentlichen Teil seiner Länge mit Verbundfasern aus Glas, Kohlenstoff, Aramid oder Draht mittels einer speziellen Wickeltechnik umwickelt ist. Beispielsweise wird bei dem überwiegend praktizierten Naßwickelverfahren in einem gesteuerten Wickelprozeß ein Faser/Harzlaminat auf den Liner aufgetragen, das in einem nachgeschalteten Wärmebehandlungsprozess seine endgültigen Gebrauchseigenschaften erhält. Verbundgasflaschen und deren Herstellung sind z. B. in der DE 31 03 646 C2, DE 38 21 852 A1 und US 3843010 beschrieben. Aus der DE 10 2006 051 376 A1 ist ein weiterer Druckbehälter bekannt. Dieser wird in einem Walzverfahren aus einem metallischen Werkstoff angefertigt. Zur Erhöhung der Festigkeit beziehungsweise für eine dünnere metallische Wandung zur Gewichtsreduzierung wurde die metallische Behälteraußenfläche, ebenfalls mit faserverstärktem Kunststoff umwickelt werden.

Weitere Verbesserungen wurden mittels einer Autofrettage erzielt. Als Autofrettage bezeichnet man ein Verfahren zur Lebensdauerverlängerung von, insbesondere faserverstärkten, Metallhohlkörpern für den Einsatz bei hohen Innendrücken. Dabei wird der Metallhohlkörper einem über dem späteren Betriebsdruck liegenden Innendruck ausgesetzt, so dass der metallische Liner plastifiziert. Nach dem Entspannen entstehen in diesem Bereich Druckeigenspannungen, die einer Rissbildung im späteren Einsatz vorbeugen und somit die Zeitfestigkeit bis hin zur Dauerfestigkeit steigern. Ein solches Beispiel findet sich ebenfalls in der Druckschrift DE 102011007361 A1.

Bei den zuvor beschriebenen Nasswickelprozessen zum Ummanteln des Liners mit einer Faserlage besteht der Nachteil darin, dass ein unerwünschter Eintrag von Luft in das Harzsystem in den verschiedenen Prozesschritten auftritt. Die eingeschlossenen Luftblasen führen zu einer erhöhten Porosität und damit einer geringeren Faservolumendichte. Die Folge davon ist einerseits eine schlechtere Anhaftung der Fasermatrix am Liner als auch Festigkeitsprobleme.

Verfahren zur Herstellung von Druckbehältern sowie die Druckbehälter sind beispielsweise aus den Schriften JP2011236926 A und JP2010125825 A sowie ein Wickelverfahren für Filamente aus der JPH04101831 A bekannt.

Die Aufgabe der vorliegenden Erfindung besteht demnach darin vorbesagte Nachteile zu überwinden und einen Druckbehälter bereitzustellen, der über eine Ummantelung aus Faserwerkstoff besteht mit einer hohen Faservolumendichte, einer optimierten Anhaftung der Fasermatrix und einer verbesserten Steifigkeit, wodurch die Wandstärke und damit das Gesamtgewicht des Druckbehälters reduzierbar ist.

Diese Aufgabe wird durch ein Verfahren mit den Merkmalen des Anspruchs 1 gelöst.

Der Grundgedanke der vorliegenden Erfindung ist es, die Entgasungsrate der im Harzsystem eingeschlossenen Luft bzw. Luftblasen während dem Herstellporzess, vorzugsweise während des Wickelprozesses des Faserverbundwerkstoffes auf den Außenmantel des Liners mittels einer Ultraschallbehandlung zu erhöhen, um dadruch die Restgasmenge im Harzsystem zu reduzieren, was zu einer niedrigeren Porosität des Faserverbundwerkstoffes und zu einer erhöhten Steifigkeit führt.

Erfindungsgemäß wird demnach ein Verfahren zur Herstellung eines Druckbehälters vorgeschlagen, der aus einem metallischen Liner besteht, der an seinem Außenmantel mit einem Faserverbundwerkstoff mit einer Harzmatrix, vorzugsweise einem CFK-Faserverbundwerkstoff verstärkt wird, wobei in wenigstens einem Fertigungsschritt die Harzmatrix des Faserverbundwerkstoffs einer Ultraschallbehandlung unterworfen wird.

Ferner wird erfindungsgemäß die Charakteristik der Ultraschallwellen bei der Ultraschallbehandlung so ausgewählt, dass eine maximal erhöhte Entgasungsrate der enthaltener Luft oder Luftblasen aus der Harzmatrix erzielt wird. Hierzu kann die Intensität und die Wellenlänge der Ultraschallwellen auf die Geometrie des Liners und die Materialbeschaffenheit abgestimmt werden. Die Entgasungsrate und die Restgasdichte lassen sich im Vergleich zu einem Verfahren ohne Anwendung einer Ultraschallbehandlung mittels geeigneter analytischer Verfahren ermitteln. Ein ebenso geeigneter Nachweis der erfolgreichen Entgasung ist eine Porositätsbestimmung, die in zerstörender oder zerstörungsfreier Messung erfolgen kann. Mit den erfindungsgemäßen Maßnahmen der Ultraschallbehandlung kann die Porosität auf einen Wert von ca. 0,05 bis 0,75 (ca. 5% bis 75%) gegenüber einer unbehandelten Harzmatrix reduziert werden. Bei dem erfindungsgemäßen Verfahren wird der Faserverbundwerkstoff mittels eines Wickelverfahrens, vorzugsweise eines Nasswickelverfahrens auf den Außenmantel des Liners aufgebracht.

Es ist vorteilhaft, wenn die Ultraschallbehandlung während des Wickelverfahrens durchgeführt wird. Ergänzend dazu kann auch das flüssige Harzbad oder die getränkte Harzmatrix vor dem Wickelprozess mit Ultraschallwellen behandelt werden. In einer weiter vorteilhaften Ausführungsform des Verfahrens kann eine Ultraschallbehandlung des Harzes der Harzmatrix auch (noch) während dem Aushärteprozess des Harzes, vorzugsweise in einer Vakuumkammer stattfinden. Durch die Verwendung eines Unterdrucks beim Wickeln und/oder beim Aushärten wird die Entgasung weiter gefördert, so dass niedrige Restgasdichten erzielt werden können.

Bei der Ultraschallbehandlung erfolgt der Eintrag der Ultraschallwellen in vorteilhafter Weise mittels wenigstens einer an den metallischen Liner mechanisch oder akustisch gekoppelten Ultraschallsonde. Es können zum Beispiel auch zwei Ultraschallsonden verwendet werden, wobei die Kopplung der Ultraschallsonden an jeweils einem Einlassstutzen bzw. Auslassstutzen des Liners des Druckbehälters erfolgt.

Erfindungsgemäß wird der Liner zum Bewickeln mit dem Faserverbundwerkstoff um seine Achse, vorzugsweise um die Mittelachse eines rotationssymmetrischen Druckbehälters gedreht. Hierbei ist vorgesehen, dass der Eintrag der Ultraschallwellen so vorgenommen wird, dass die Erhöhung der Entgasungsrate durch Ultraschallanregung nur im jeweils bei der Drehung des Liners oben gelegenen Bereich der oberen Halbschale erfolgt. Hierdurch wird vermieden, dass Gas, welches an der Unterseite austritt nicht nach oben entweichen kann, was dem gewünschten Effekt entgegenwirken würde. Dies kann durch geeignete Auswahl von Ultraschallsensoren und deren angepasste Kopplung an den Liner erfolgen, so dass nur die obere Halbschale in die gewünschte Ultraschallresonanz gerät.

Eine besonders vorteilhafte Ausführung besteht in der Kombination eines Aluminiumliners mit CFK-Fasern. Mit Vorteil kann aber auch bei anderen metallischen Werkstoffen des Liners der Faserverbundwerkstoff aus Kohlenstofffasern und/oder Glasfasern bestehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:

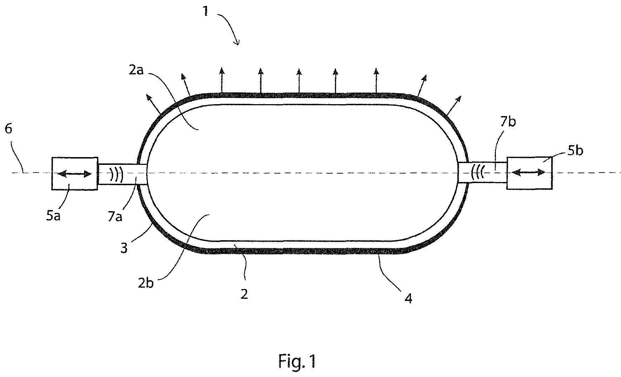

- Fig.1: eine schematische Schnittansicht durch einen Druckbehälter mit zwei angeordneten Ultraschallsonden zum Eintrag von Ultraschallwellen.

In Figur 1 wird schematisch der Verfahrensschritt der Ultraschallbehandlung eines Druckbehälters 1 mit zwei angeordneten Ultraschallsonden 5a, 5b zum Eintrag von Ultraschallwellen dargestellt. Das Ausführungsbeispiel zeigt einen Druckbehälter 1 bestehend aus einem Aluminium-Liner 2, der an seinem Außenmantel 3 mittels eines Wickelverfahrens mit einem Faserverbundwerkstoff 4 mit einer Harzmatrix verstärkt wurde.
Das Verfahren wird so ausgeführt, dass der Liner 2 zum Bewickeln mit dem Faserverbundwerkstoff um seine Achse 6 rotiert. Dadurch befindet sich immer die eine Hälfte 2a (obere Halbschale) oberhalb der durch die Achse 6 gebildeten horizontalen Schnittebene und die andere Hälfte 2b (untere Halbschale) unterhalb der besagten Schnittebene. Es wird darauf hingewiesen, dass die Begriffe "Halbschale" nicht bedeuten, dass der Liner aus 2 Hälften zusammengefügt wurde, sondern lediglich den Bereich bezeichnet, der sich entweder oberhalb oder aber unterhalb der Schnittebene befindet.

In dem Fertigungsschritt des Wickelns wird die Harzmatrix des Faserverbundwerkstoffs 4 einer Ultraschallbehandlung unterworfen und zwar durch die Kopplung der beiden Ultraschallsonden 5a, 5b, die am Einlassstutzen 7a und am Auslassstutzen 7b des Liners 2 des Druckbehälters 1 angebracht sind.

Die Charakteristik der Ultraschallwellen bei der Ultraschallbehandlung ist so ausgewählt, dass einerseits eine erhöhte Entgasungsrate der enthaltener Luft oder Luftblasen aus der Harzmatrix erzielt wird und andererseits ganz überwiegend im Bereich der oberen Halbschale eine Entgasung angeregt wird. Anders ausgedrückt bedeutet dies, dass der Eintrag der Ultraschallwellen so vorgenommen wird, dass die Erhöhung der Entgasungsrate durch Ultraschallanregung überwiegend oder nur im jeweils bei der Drehung des Liners 2 oben gelegenen Bereich, also im Bereich der oberen Halbschale 2a erfolgt.

Nichtdestotrotz kann auch die Anregung und damit Entgasung am gesamten Außenmantel erfolgen und eine entsprechende Ultraschallanregung verwendet werden.

In einem weiteren Verfahrensschritt nach Abschluss des Wickelverfahrens und dem Aufbringen des Faserverbundwerkstoffes 4 erfolgt die Aushärtung in einem Vakuumofen. Während der Aushärtung wird ebenfalls eine Ultraschallbehandlung des Harzes der Harzmatrix durchgeführt.
Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Herstellung eines Druckbehälters (1) aus einem metallischen Liner (2), der an seinem Außenmantel (3) durch Bewicklen mit Faserverbundwerkstoff (4) mit einer Harzmatrix verstärkt wird, wobei der Liner (2) zum Bewickeln mit dem Faserverbundwerkstoff (4) um eine Achse (6) des Druckbehälters (1) rotiert und wobei in wenigstens einem Fertigungsschritt die Harzmatrix des Faserverbundwerkstoffs einer Ultraschallbehandlung mit Ultraschallwellen unterworfen wird, wobei die Charakteristik der Ultraschallwellen bei der Ultraschallbehandlung so ausgewählt wird, dass eine erhöhte Entgasungsrate der enthaltener Luft oder Luftblasen aus der Harzmatrix erzielt wird und der Eintrag der Ultraschallwellen so vorgenommen wird, dass die Erhöhung der Entgasungsrate durch Ultraschallanregung nur im jeweils bei der Drehung des Liners (2) oben gelegenen Bereich der oberen Halbschale (2a) erfolgt.

2. Verfahren nach Anspruch 1, **dadurch gekennzeichnet, dass** die Ultraschallbehandlung während dem Wickelverfahren durchgeführt wird.

3. Verfahren nach Anspruch 1 oder 2, **dadurch gekennzeichnet, dass** bei der Ultraschallbehandlung der Eintrag der Ultraschallwellen mittels wenigstens einer an den metallischen Liner (2) mechanisch oder akustisch gekoppelten Ultraschallsonde (5a, 5b) erfolgt.

4. Verfahren nach Anspruch 3, **dadurch gekennzeichnet, dass** die Kopplung der Ultraschallsonde(n) (5a, 5b) an wenigstens einem Einlassstutzen oder Auslassstutzen des Liners (2) des Druckbehälters (1) erfolgt.

5. Verfahren nach einem der vorhergehenden Ansprüche 1-4, **dadurch gekennzeichnet, dass** eine Ultraschallbehandlung des Harzes der Harzmatrix vor dem Aufbringen der Faserverbundmatrix und/oder während dem Aushärteprozess, vorzugsweise in einer Vakuumkammer stattfindet.

6. Verfahren nach einem der vorhergehenden Ansprüche 1-5, **dadurch gekennzeichnet, dass** der Faserverbundwerkstoff aus Kohlenstofffasern und/oder Glasfasern besteht.

## Claims

1. A method for producing a pressure vessel (1) from a metal liner (2) which is reinforced on its outer casing (3) by being wound with fibre composite material (4) with a resin matrix, wherein the liner (2), to be wound with the fibre composite material (4), rotates about an axis (6) of the pressure vessel (1) and wherein in at least one manufacturing step the resin matrix of the fibre composite material is subjected to an ultrasound treatment with ultrasonic waves, wherein the characteristic of the ultrasonic waves during the ultrasound treatment is selected such that an increased degassing rate of the air or air bubbles contained from the resin matrix is achieved and the ultrasonic waves are introduced such that the increase in the degassing rate due to ultrasonic excitation takes place only in the region of the upper half-shell (2a) which is located at the top upon the rotation of the liner (2) in each case.

2. A method according to Claim 1, **characterised in that** the ultrasound treatment is carried out during the winding operation.

3. A method according to Claim 1 or Claim 2, **characterised in that** during the ultrasound treatment the ultrasonic waves are introduced by means of at least one ultrasound probe (5a, 5b) coupled mechanically or acoustically to the metal liner (2).

4. A method according to Claim 3, **characterised in that** the ultrasound probe(s) (5a, 5b) are coupled to at least one inlet branch or outlet branch of the liner (2) of the pressure vessel (1).

5. A method according to one of the preceding Claims 1 - 4, **characterised in that** an ultrasound treatment of the resin of the resin matrix takes place prior to the application of the fibre composite matrix and/or during the curing process, preferably in a vacuum chamber.

6. A method according to one of the preceding Claims 1 - 5, **characterised in that** the fibre composite material consists of carbon fibres and/or glass fibres.

## Revendications

1. Procédé de fabrication d'un réservoir sous pression (1) comportant une enceinte interne métallique (2) qui est rigidifiée sur son enveloppe externe (3) par enroulement avec un matériau composite renforcé par des fibres (4) ayant une matrice en résine, l'enceinte interne (2) tournant, pour permettre l'enroulement avec le matériau composite renforcé par des fibres (4) autour de l'axe (6) du réservoir sous pression (1), et lors d'au moins une étape de fabrication, la matrice en résine du matériau composite à base de fibres étant soumise à un traitement par des ondes ultrasonores, la caractéristique des ondes ultrasonores lors de ce traitement étant sélectionnée de façon à obtenir un taux d'extraction augmenté de l'air ou des bulles d'air contenues de la matrice en résine, et l'introduction des ondes ultrasonores étant effectuée de sorte que l'augmentation du taux de dégazage par l'excitation ultrasonore ne se produise que dans la zone respective de la demi-coque supérieure (2a) située en haut lors de la rotation de l'enceinte interne (2).

2. Procédé conforme à la revendication 1,
**caractérisé en ce que**
le traitement par ultrasons est mis en œuvre au cours du procédé d'enroulement.

3. Procédé conforme à la revendication 1 ou 2,
**caractérisé en ce que**
lors du traitement par ultrasons l'introduction des ondes ultrasonores est effectuée au moyen d'au moins une sonde à ultrasons (5a, 5b) couplée mécaniquement ou acoustiquement à l'enceinte interne métallique (2).

4. Procédé conforme à la revendication 3,
**caractérisé en ce que**
le couplage de la ou des sonde(s) à ultrasons (5a, 5b) est effectué sur au moins un embout d'entrée ou de sortie de l'enceinte interne (2) du réservoir sous pression (1).

5. Procédé conforme à l'une des revendications précédentes 1 à 4,
**caractérisé en ce qu'**
un traitement par ultrasons de la résine de la matrice en résine est effectué avant l'application de la matrice composite renforcée par des fibres et/ou pendant le processus de durcissement, de préférence dans une chambre à vide.

6. Procédé conforme à l'une des revendications précédentes 1 à 5,
**caractérisé en ce que**
le matériau synthétique renforcé par des fibres est constitué de fibres de carbone et/ou de fibres de verre.
